# EUROPEAN PATENT APPLICATION

(11) **EP 4 471 476 A1**
(43) Date of publication of application: **04.12.2024**
(21) Application number: 24177289.6
(22) Date of filing: 22.05.2024
(51) Int. Cl.: G02B 6/44

(54) **HIGH DENSITY DUAL CAVITY FIBER OPTIC CONNECTION MODULE, AND ASSOCIATED APPARATUS AND METHODS**

(30) Priority: 30.05.2023 US 202363469600 P
(71) Applicant: Corning Research & Development Corporation, Corning, New York 14831 (US)
(72) Inventor: FLORIAN LOHSE, Chenueh Abongwa, 10827 Berlin (DE); GRYGIEL, Tim, 39218 Schoenebeck (DE); JIMENEZ ZAVALA, Ricardo, 88710 Reynosa (MX); McMINN, Gregory Earl, Texas, 76148 (US); PACKIARAJAN, Selvam, Texas, 75035 (US)
(74) Representative: Reddie & Grose LLP

(57) **Abstract**

A fiber optic connection module includes a body structure defining upper and lower cavities separated by a floor, with each cavity being configured to receive multiple optical components (e.g., three-port optical components) and multiple splices. Sidewalls of the body structure include upper peripheral sidewall portions that laterally bound the upper cavity, and lower peripheral sidewall portions that laterally bound the lower cavity. In each of the respective cavities, multiple fiber guide members project from the floor into the cavity, and are configured to retain a plurality of optical fibers between the fiber guide members and peripheral sidewall portions. Openings in the floor permit inter-cavity fiber routing within a module, while lateral openings in sidewalls of modules permit optical fibers to be routed between modules when in a side-by side configuration. A fiber optic apparatus including multiple cassettes and multiple fiber optic connection modules therein may support a density of 108 or 144 three-port optical components per U-space of a chassis arrangeable in an equipment rack.

## Description

### PRIORITY APPLICATION

This application claims the benefit of priority of U.S. Provisional Application No. 63/469,600, filed on May 30, 2023, the content of which is relied upon and incorporated herein by reference in its entirety.

### BACKGROUND

The disclosure relates generally to fiber optic assemblies used in telecommunication systems, and in particular relates to fiber optic connection modules for containing optical components (especially wavelength division multiplexing (WDM) components) and corresponding splices, as well as cassettes and apparatuses incorporating such modules, as well as and methods of fabricating and using the foregoing items.

Optical fibers are useful in a wide variety of applications, including the telecommunications industry for voice, video, and data transmission. To meet modern demands for increased bandwidth and improved performance, telecommunication networks are increasing providing optical fiber connectivity closer to end subscribers. These initiatives include fiber-to-the-node (FTTN), fiber-to-the-premises (FTTP), fiber-to-the-home (FTTH), and the like (generally described as FTTx).

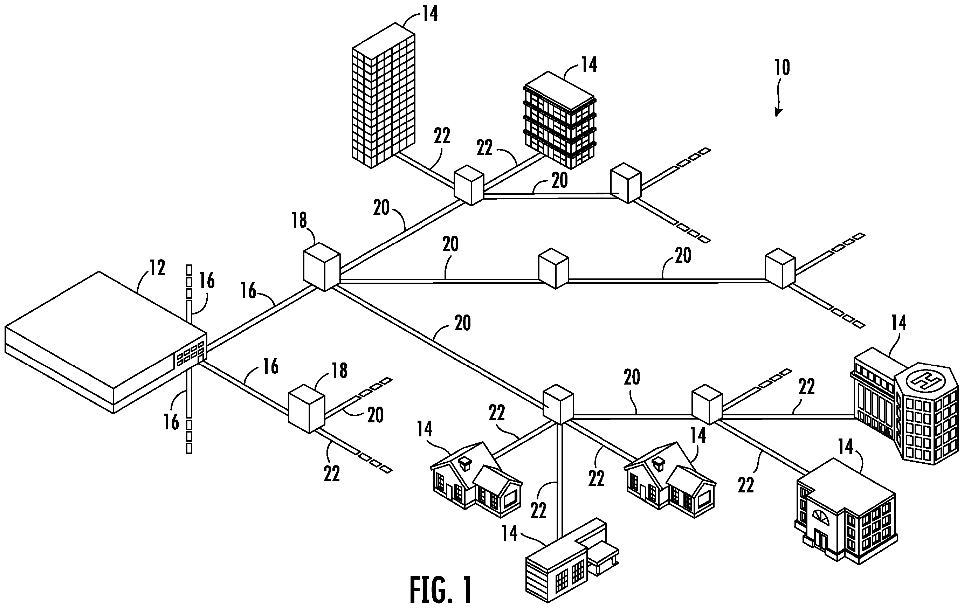

In an FTTx network, fiber optic cables are used to carry optical signals to various distribution points and, in some cases, all the way to end subscribers. For example, **FIG. 1** is a schematic diagram of an exemplary FTTx network 10 that distributes optical signals generated at a switching point 12 (e.g., a central office of a network provider) to subscriber premises 14. Optical line terminals (OLTs) (not shown) at the switching point 12 convert electrical signals to optical signals. Fiber optic feeder cables 16 then carry the optical signals to various local convergence points 18, which act as locations for splicing and making cross-connections and interconnections. The local convergence points 18 often include splitters to enable any given optical fiber in the fiber optic feeder cable 16 to serve multiple subscriber premises 14. As a result, the optical signals are "branched out" from the optical fibers of the fiber optic feeder cables 16 to optical fibers of distribution cables 20 that exit the local convergence points 18.

At network access points closer to the subscriber premises 14, some or all of the optical fibers in the distribution cables 20 may be accessed to connect to one or more subscriber premises 14. Drop cables 22 extend from the network access points to the subscriber premises 14, which may be single-dwelling units (SDU), multi-dwelling units (MDU), businesses, and/or other facilities or buildings. A conversion of optical signals back to electrical signals may occur at the network access points or at the subscriber premises 14.

There are many different network architectures, and the various tasks required to distribute optical signals (e.g., splitting, splicing, routing, connecting subscribers) can occur at several locations. Regardless of whether a location is considered a local convergence point, network access point, subscriber premise, or something else, fiber optic equipment is used to house components that carry out one or more of the tasks. The term "terminal" may be used in this disclosure to generically refer to such equipment, which may include fiber distribution hubs (FDH), cabinets, closures, network interface devices, distributor frames, etc.

Wavelength division multiplexing (WDM) is known for increasing the amount of data transmitted through an optical fiber by using different wavelengths of laser light. For example, the fiber optic network may include a multiplexer on the transmission side of the optical signal to combine several signals together and transmit that signal through an optical fiber of the fiber optic network. The fiber optic network may further include a demultiplexer on the receiver side of the optical signal to split the signal back out to its individual signals. To this end, various terminals of the fiber optic network 10, such as at the switching point 12 or the local convergence point 18, may include one or more WDM cassettes for multiplexing and/or demultiplexing signals carried through the fiber optic network 10.

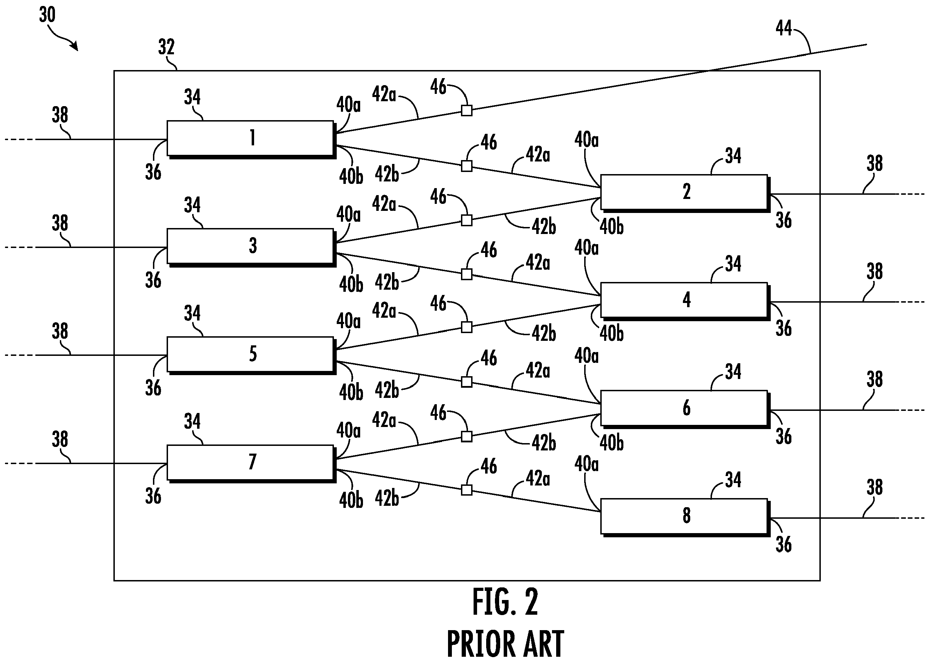

**FIG. 2** is a schematic diagram of a WDM cassette 30 in accordance with the prior art. The cassette 30 includes a cassette body 32 having a plurality of wavelength filter devices 34 (also referred to as "wavelength filters 34" or "filters 34" herein) arranged in the cassette body 32. In the illustrated case, the WDM cassette 30 is an 8-channel cassette (with eight (8) corresponding wavelength filters 34), but the number may vary. Each of the filters 34 may be a three-port wavelength division multiplexing (WDM) optical component having a first side or end with a transmission port 36 from which an optical fiber 38 extends and a second side or end with an input/output (I/O) port 40a and a reflection port 40b from which respective optical fibers 42a, 42b extend. A three-port optical device may have a cylindrical body. The cassette 30 also includes a combination optical fiber 44 ("com fiber") that carries a combined signal either as an input or an output to or from the cassette 30. The com fiber 44 is connected to an I/O port 40a, via the appropriate optical fiber 42a, associated with one of the wavelength filters 34 (e.g., the first wavelength filter 34), as illustrated in **FIG. 2****.** The optical fibers 42a, 42b from the I/O ports 40a and reflective ports 40b are concatenated in a zig-zag pattern between the plurality of wavelength filters 34, as is generally known in the art. The structure and function of such devices are well-known to those in the optical communications field and, as a result, need not be described in this disclosure. Thus, even though multiple components (e.g., collimators, lenses, thin-film filter, etc.) may be included as part of the wavelength filters 34, such components are not illustrated to simplify the drawings.

In operation, the WDM cassette 30 may be bidirectional and operate in a multiplexing mode or a demultiplexing mode. In a multiplexing mode, optical signals of different wavelength are transmitted as input to the transmission ports 36 of the filters 34 via optical fibers 38 to produce a combined signal output through the com fiber 44 and through the fiber optic network 10. In a demultiplexing mode, a combined signal is input through the com fiber 44 and separated out to optical signals of different wavelength and output through the transmission ports 36 of the wavelength filters 34 via optical fibers 38. Although not shown, the cassette 30 may include multiple com fibers 44 and have the capability of operating in both multiplexing mode and demultiplexing mode via the different com fibers 44, as is generally known in the optical communications industry.

While the WDM cassette 30 as schematically illustrated in **FIG. 2** generally operates for its intended purpose, such cassettes have drawbacks which manufacturers seek to address. By way of example, constructing a WDM cassette can be a labor-intensive and time-consuming task. More particularly, construction of a WDM cassette is typically done component-by-component and typically employs single splice connections 46 for the optical fibers 42a, 42b, 44 on the concatenated side of the wavelength filters 34. Since each component and optical fiber is handled individually, there is a high risk of damaging the optical fibers 42a, 42b, 44, mixing up the order of the I/O ports 40a and reflective ports 40b in the concatenation sequence (especially for high channel cassettes), forming defective splices 46 between optical fibers 42a, 42b, 44, etc. that result in a low first pass yield for WDM cassettes 30. The defective WDM cassettes 30 then have to be analyzed (e.g., by troubleshooting) to locate and resolve the defects, which further increases time and costs.

Additionally, to allow future rework of the WDM cassette 30, depending on various potential applications and configurations, the optical fibers 42a, 42b, 44 are provided with excess fiber lengths that are stored in the WDM cassette 30. The amount of additional fiber length for each of the optical fibers 42a, 42b, 44 is typically unspecified and provided in an *ad hoc* manner, with technicians tending to provide too much fiber length to ensure rework capability of the cassette in the future. Additionally, the WDM cassette 30 generally includes no or limited fiber routing fixtures for handling the excess fiber length within the cassette 30. The result can be a highly unorganized fiber stack piled on top of the cassette components that makes any rework of the WDM cassette 30 using the excess fiber length difficult and time consuming. This frustrates the very purpose of providing excess fiber lengths in a WDM cassette 30.

With growing demand for higher capacity in optical networks, WDM is increasingly desirable for inclusion in datacenter applications. To form a complex de-/multiplexing system, many three-port optical devices should be integrated in a single 19" or 23" wide fiber optic equipment rack.

Certain improvements to WDM cassettes are disclosed in U.S. Patent Application Publication No. 2022/0397736 assigned to Corning Research and Development Corp., with such publication disclosing first and second cassette body portions to which wavelength filters may be attached, wherein the cassette body portions may be joined together side-by-side to form a cassette body. Despite the disclosure of the foregoing publication, need still exists in the art for improved apparatuses for housing WDM components and associated splices, to address aspects such as component density, connection flexibility, and ease of manufacturing and use.

### SUMMARY

Aspects of the present disclosure provide a fiber optic connection module that includes a body structure defining an upper cavity and a lower cavity separated by a floor, with the upper cavity being configured to receive a first plurality of optical components and a plurality of first splices, and with the lower cavity being configured to receive a second plurality of optical components and a plurality of second splices, wherein at least one opening defined by the floor is configured to permit routing of optical fibers between the upper cavity and the lower cavity. The body structure further comprises sidewalls, wherein upper peripheral sidewall portions and the floor bound the upper cavity, while lower peripheral sidewall portions and the floor bound the lower cavity. In each of the respective cavities, a plurality of fiber guide members projects from the floor into the cavity, with the fiber guide members being configured to retain a plurality of optical fibers between the fiber guide members and peripheral sidewall portions. The dual cavity arrangement significantly increases density of optical components (e.g., three-port optical components) that may be received by a module. Openings in the floor permit inter-cavity fiber routing within a fiber optic connection module, while lateral openings in sidewalls of modules permit optical fibers to be routed between modules when arranged in a side-by side configuration, thereby enhancing interconnection flexibility. Multiple three-port optical components may be assembled (e.g., as logical groups) in upper and lower cavities of individual fiber optic connection modules, and then multiple modules may be removably joined (e.g., interlocked) together in a cassette.

In one aspect, the disclosure relates to a fiber optic connection module comprising a body structure that comprises a floor and sidewalls, the sidewalls including upper peripheral sidewall portions projecting upward relative to the floor and lower peripheral sidewall portions projecting downward relative to the floor, the floor having an upper surface and a lower surface, and the floor defining at least one opening, wherein the body structure further defines an upper cavity and a lower cavity, the upper cavity being bounded by the upper surface of the floor and the upper peripheral sidewall portions, and the lower cavity being bounded by the lower surface of the floor and the lower peripheral sidewall portions. The fiber optic connection module further comprises a plurality of first fiber guide members projecting from the floor into the upper cavity and configured to retain a first plurality of optical fibers between the first fiber guide members and the upper peripheral sidewall portions, and comprises a plurality of second fiber guide members projecting from the floor into the lower cavity and configured to retain a second plurality of optical fibers between the second fiber guide members and the lower peripheral sidewall portions. The upper cavity is configured to receive a plurality of first optical components and a plurality of first splices, the lower cavity is configured to receive a plurality of second optical components and a plurality of second splices, and the at least one opening defined by the floor is configured permit routing of optical fibers between the upper cavity and the lower cavity.

In certain embodiments, the plurality of first optical components comprises a plurality of first three-port optical components, and the plurality of second optical components comprises a plurality of second three-port optical components.

In certain embodiments, the sidewalls define a plurality of lateral openings each receiving a corresponding grommet configured to permit passage of an optical fiber through the sidewall.

In certain embodiments, each lateral opening of the plurality of lateral openings comprises a primary vertical slot into which the corresponding grommet is received, and the corresponding grommet comprises a secondary vertical slot that permits passage of an optical fiber through the sidewall.

In certain embodiments, the upper peripheral sidewall portions comprise an upper sidewall edge distal from the floor; the lower peripheral sidewall portions comprise a lower sidewall edge distal from the floor; and the fiber optic connection module further comprises: a plurality of upper fiber retention members projecting inward from the upper peripheral sidewall portions proximate to the upper sidewall edge; and a plurality of lower fiber retention members projecting inward from the lower peripheral sidewall portions proximate to the lower sidewall edge.

In certain embodiments, the sidewalls comprise four sidewalls; the body structure comprises a rectangular shape and four corners defined by the four sidewalls; the body structure further comprises four corner transition walls that are proximate to, and inset from the four corners; each corner transition wall of the four corner transition walls comprises a curved shape and merges into two adjacent sidewalls of the four sidewalls; and the four corner transition walls include upper transition wall portions projecting upward relative to the floor and lower transition wall portions projecting downward relative to the floor.

In certain embodiments, each corner transition wall of the four corner transition walls defines a transition wall opening configured to permit passage of an optical fiber through the corner transition wall.

In certain embodiments, each first fiber guide member comprises a first fiber retaining tab projecting outwardly and being substantially parallel to the floor; and each second fiber guide member comprises a second fiber retaining tab projecting outwardly and being substantially parallel to the floor.

In certain embodiments, mechanical interlocking features are provided along exterior surfaces of two opposing sidewalls and configured permit the fiber optic connection module to be removably engaged to an adjacent fiber optic connection module in a side-by-side configuration

In certain embodiments, the upper surface of the floor comprises a first plurality of recesses configured to receive portions of the plurality of first optical components, and the lower surface of the floor comprises a second plurality of recesses configured to receive portions of the plurality of second optical components.

In certain embodiments, the upper cavity has a height of less than 5 mm, the lower cavity has a height of less than 5 mm, and the body structure has a total height of no greater than 10 mm.

In certain embodiments, the body structure has a width of less than 80 mm and a length of less than 100 mm.

In certain embodiments, the fiber optic connection module is configured to receive a first group of nine three-port optical components in the upper cavity, and is configured to receive a second group of nine three-port optical components in the lower cavity.

In another aspect, the disclosure relates to a cassette comprising a plurality of fiber optic connection modules as disclosed herein, with the fiber optic connection modules of the plurality of fiber optic connection modules being arranged in a side-by-side configuration.

In certain embodiments, the plurality of fiber optic connection modules comprises four fiber optic connection modules; and each fiber optic connection module of the four fiber optic connection modules is configured to receive a first group of nine three-port optical components in the upper cavity, and being configured to receive a second group of nine three-port optical components in the lower cavity.

In another aspect, the disclosure relates to a fiber optic apparatus comprising: a chassis configured to be disposed in an equipment rack; a plurality of cassettes supported by the chassis and extendable relative to the chassis; and a plurality of fiber optic connection modules configured to be installed in the plurality of cassettes, wherein each fiber optic connection module of the plurality of fiber optic connection modules comprises a body structure including an upper cavity and a lower cavity separated by a floor defining at least one opening configured to permit routing of optical fibers between the upper cavity and the lower cavity, and each of the upper cavity and the lower cavity is configured to receive multiple three-port optical components and multiple splices, wherein the plurality of cassettes and the plurality of fiber optic connection modules are configured to support three-port optical component density of at least one hundred eight (108) three-port optical components per U space of the chassis, wherein a U space comprises a height of 1.75 inches and comprises a width of 19 inches or 23 inches.

In certain embodiments, the plurality of cassettes and the plurality of fiber optic connection modules are configured to support three-port optical component density of one hundred forty-four (144) three-port optical components per U space of the chassis.

In certain embodiments, for each fiber optic connection module of the plurality of fiber optic connection modules, the body structure further comprises sidewalls, and mechanical interlocking features along exterior surfaces of two opposing sidewalls and configured permit the fiber optic connection module to be removably engaged to an adjacent fiber optic connection module of the plurality of fiber optic connection modules; wherein each cassette of the plurality of cassettes is configured to receive multiple fiber optic connection modules of the plurality of fiber optic connection modules arranged in a side-by-side configuration.

In certain embodiments, for each fiber optic connection module of the plurality of fiber optic connection modules, the body structure further comprises sidewalls including upper peripheral sidewall portions projecting upward relative to the floor and lower peripheral sidewall portions projecting downward relative to the floor, the floor having an upper surface and a lower surface, wherein the upper cavity is bounded by the upper surface of the floor and the upper peripheral sidewall portions, and the lower cavity is bounded by the lower surface of the floor and the lower peripheral sidewall portions.

In certain embodiments, for each fiber optic connection module of the plurality of fiber optic connection modules, a plurality of first fiber guide members project from the floor into the upper cavity and are configured to retain a first plurality of optical fibers between the first fiber guide members and the upper peripheral sidewall portions, and a plurality of second fiber guide members project from the floor into the lower cavity and are configured to retain a second plurality of optical fibers between the second fiber guide members and the lower peripheral sidewall portions.

In certain embodiments, for each fiber optic connection module of the plurality of fiber optic connection modules: the upper peripheral sidewall portions comprise an upper sidewall edge distal from the floor; the lower peripheral sidewall portions comprise a lower sidewall edge distal from the floor; a plurality of upper fiber retention members project inward from the upper peripheral sidewall portions proximate to the upper sidewall edge; and a plurality of lower fiber retention members project inward from the lower peripheral sidewall portions proximate to the lower sidewall edge.

In certain embodiments, for each fiber optic connection module of the plurality of fiber optic connection modules: the sidewalls define a plurality of lateral openings, each lateral opening of the plurality of lateral openings comprises a primary vertical slot into which a corresponding grommet is received, and the corresponding grommet comprises a secondary vertical slot that permits passage of an optical fiber through the sidewall.

In certain embodiments, for each fiber optic connection module of the plurality of fiber optic connection modules: the sidewalls comprise four sidewalls; the body structure comprises a rectangular shape and four corners defined by the four sidewalls; the body structure further comprises four corner transition walls that are proximate to, and inset from the four corners; each corner transition wall of the four corner transition walls comprises a curved shape and merges into two adjacent sidewalls of the four sidewalls; and the four corner transition walls include upper transition wall portions projecting upward relative to the floor and lower transition wall portions projecting downward relative to the floor.

In certain embodiments, the plurality of cassettes comprises two cassettes per U-space of the chassis, and the plurality of fiber optic connection modules comprises four fiber optic connection modules per cassette.

In another aspect, the disclosure relates to a method for fabricating a fiber optic apparatus, the method comprising: connecting, with multiple optical fibers and multiple fiber splices, a plurality of first three-port optical components in an upper cavity of a first fiber optic connection module; connecting, with multiple optical fibers and multiple fiber splices, a plurality of second three-port optical components in a lower cavity of the first fiber optic connection module, wherein a floor of the first fiber optic connection module is provided between the upper cavity and the lower cavity of the first fiber optic connection module; testing the plurality of first three-port optical components and the plurality of second three-port optical components; and installing the first fiber optic connection module in a cassette configured to be supported by a chassis and configured to be extendable relative to the chassis; wherein the testing of the plurality of first three-port optical components and the plurality of second three-port optical components is performed prior to the installing of the first fiber optic connection module in the cassette.

In certain embodiments, the method further comprises: connecting, with multiple optical fibers and multiple fiber splices, a plurality of third three-port optical components in an upper cavity of a second fiber optic connection module; connecting, with multiple optical fibers and multiple fiber splices, a plurality of fourth three-port optical components in a lower cavity of the second fiber optic connection module, wherein a floor of the second fiber optic connection module is provided between the upper cavity and the lower cavity of the second fiber optic connection module; testing the plurality of third three-port optical components and the plurality of fourth three-port optical components; and mechanically coupling the second fiber optic connection module with the first fiber optic connection module, and installing the second fiber optic connection module in the cassette; wherein the testing of the plurality of third three-port optical components and the plurality of fourth three-port optical components is performed prior to the installing of the second fiber optic connection module in the cassette.

Additional features and advantages will be set forth in the detailed description which follows, and in part will be readily apparent to those skilled in the technical field of optical connectivity. It is to be understood that the foregoing general description, the following detailed description, and the accompanying drawings are merely exemplary and intended to provide an overview or framework to understand the nature and character of the claims.

### BRIEF DESCRIPTION OF THE DRAWINGS

The accompanying drawings are included to provide a further understanding, and are incorporated in and constitute a part of this specification. The drawings illustrate one or more embodiment(s), and together with the description serve to explain principles and operation of the various embodiments. Features and attributes associated with any of the embodiments shown or described may be applied to other embodiments shown, described, or appreciated based on this disclosure.
**FIG. 1** is a schematic diagram of an exemplary FTTx network.
**FIG. 2** is a schematic diagram of a conventional WDM cassette according to the prior art.
**FIG. 3** is a schematic of a simplified 48 channel dense wavelength division multiplexing (DWDM) optical circuit in which an input optical fiber is connected to a concatenated structure of 5 times 8 skip 0 (8s0) bandpass filters, wherein a bandpass path of each 8s0 filter is connected to a group of 8x DWDM filter optical components.
**FIG. 4** is an upper perspective view of a fiber optic connection module according to one embodiment of the present disclosure, the fiber optic connection module including a body structure defining upper and lower cavities separated by a floor, with each cavity being configured to receive multiple optical components and multiple splices.
**FIG. 5** is a lower perspective view of the fiber optic connection module of **FIG. 4****.**
**FIG. 6** is a top plan view of the fiber optic connection module of **FIG. 4****.**
**FIG. 7** is a cross-sectional view of the fiber optic connection module of **FIG. 4****.**
**FIG. 8** is an upper perspective view of a first portion of the fiber optic connection module of **FIG. 4****.**
**FIG. 9** is an upper perspective view of a second portion of the fiber optic connection module of **FIG. 4****.**
**FIG. 10** is an upper perspective view of a third portion of the fiber optic connection module of **FIG. 4****.**
**FIG. 11** is a simplified cross-sectional view of a cylindrical optical component partially received within a longitudinal slot defined in a floor of a fiber optic connection module according to **FIG. 4****.**
**FIG. 12** is a schematic optical interconnection diagram for nine three-port optical components and associated splices that may be arranged within one cavity of a fiber optic connection module according to one embodiment of the present disclosure.
**FIG. 13** is a simplified top plan view of a fiber optic connection module according to one embodiment including the interconnected nine three-port connectors and associated splices of **FIG. 12****.**
**FIG. 14** is an upper perspective view of a cassette configured to be slidably received in a chassis, the cassette containing four fiber optic connection modules according to **FIG. 4** in an interconnected side-by-side configuration, with a hinged lid of the cassette in an open state.
**FIG. 15** is a top plan view of the cassette of **FIG. 14****,** with the hinged lid of the cassette in an open state.
**FIG. 16** is an upper perspective view of the cassette of **FIG. 14** with the hinged lid of the cassette in a closed state.
**FIG. 17** is a perspective view of an optical assembly including a chassis in which twelve cassettes according to **FIG. 14** (each containing four fiber optic connection modules according to **FIG. 4****)** are received, with each cassette in an inserted (closed) configuration.
**FIG. 18** is a perspective view of the optical assembly of **FIG. 17** with the uppermost cassette in a retracted (open) configuration, and with the hinged lid thereof in an open state to expose the fiber optic connection modules therein.
**FIG. 19** is a perspective view of the optical assembly of **FIG. 17** mounted in an equipment rack.

### DETAILED DESCRIPTION

Reference is now made in detail to the present preferred embodiments of the disclosure, examples of which are illustrated in the accompanying drawings. Whenever possible, the same or similar reference numerals are used throughout the drawings to refer to the same or similar parts. It should be understood that the embodiments disclosed herein are merely examples, each incorporating certain benefits of the present disclosure. Various modifications and alterations may be made to the following examples within the scope of the present invention, and aspects of the different examples may be mixed in different ways to achieve yet further examples. Accordingly, the true scope of the invention is to be understood from the entirety of the present disclosure, in view of but not limited to the embodiments described herein.

In general, the description relates to a fiber optic connection module including an upper cavity and a lower cavity that are separated by a floor, with each cavity being configured to receive multiple optical components (e.g., three-port optical components) and multiple splices. Sidewalls of the body structure include upper peripheral sidewall portions that laterally bound the upper cavity, and lower peripheral sidewall portions that laterally bound the lower cavity. In each of the respective cavities, multiple fiber guide members project from the floor into the cavity, and are configured to retain a plurality of optical fibers between the fiber guide members and peripheral sidewall portions. A first group of optical components (e.g., three-port components) may be assembled to form a first logical group in the upper cavity of a fiber optic connection module, the module may be flipped over (upside-down), and a second group of optical components may be assembled to form a second logical group in the lower cavity. Openings in the floor permit inter-cavity fiber routing within a module, while lateral openings in sidewalls of modules permit optical fibers to be routed between modules when in a side-by side configuration. Multiple fiber optic connection modules may be received by a cassette and connected to one another; thereafter, connections to other components and/or to a front plate of the cassette may be made. Fiber access ports may be arranged at multiple positions along sidewalls of a fiber optic connection module, thereby allowing custom wiring schemes between interconnected modules and elsewhere (e.g., to a front plate of a cassette).

Providing multiple dual-cavity modules that may be interconnected in a cassette confers numerous advantages over traditional WDM cassettes. Firstly, the dual-cavity approach allows capacity (i.e., component density) to be increased. Both cavities share a common floor, therefore saving overall height (in comparison to hypothetically stacking first and second modules each having a dedicated floor and single cavity). Providing multiple modules in a single cassette enhances manufacturing scalability, since modules may be separately assembled and logical groups of optical components therein may be tested before the modules are assembled in a cassette. Testing of populated modules ensures that only in-specification components get assembled to a cassette, thereby reducing rework frequency. Providing multiple modules in a single cassette also eases the difficulty of rework, because components that are damaged or out of specification can be identified and replaced more easily. Presence of mechanical interlocking features permits multiple modules to be fixed to one another, either within a cassette or outside a cassette (which eases testing of larger logical groups outside a cassette).

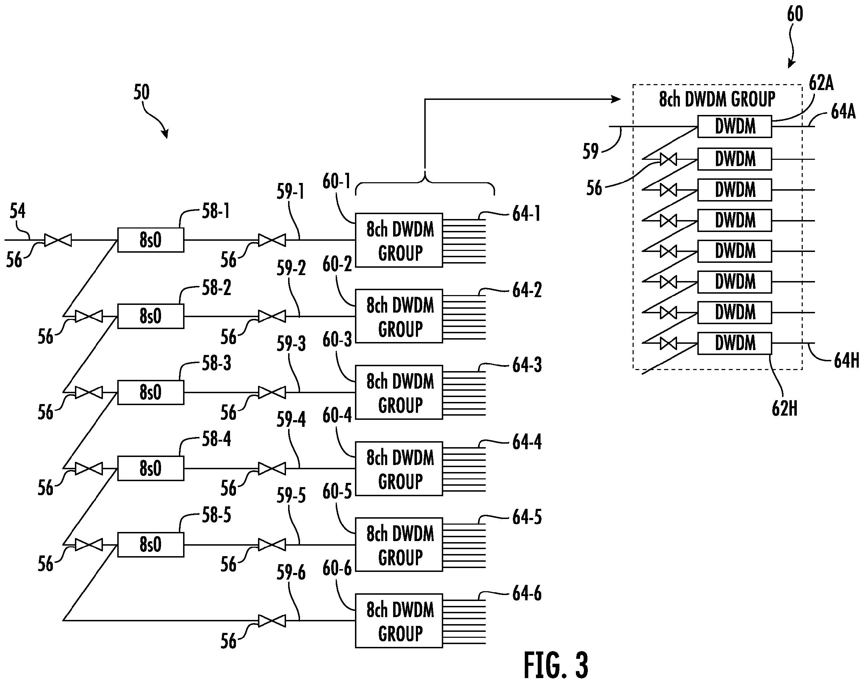

**FIG. 3** is a schematic of a simplified 48 channel dense wavelength division multiplexing (DWDM) optical circuit 50 in which an input optical fiber 54 is connected to a concatenated structure of 5 times 8 skip 0 (8s0) bandpass filters 58-1 to 58-5, wherein a bandpass path of each 8s0 bandpass filter 58-1 to 58-5 is connected by an intermediate fiber 59-1 to 59-6 and splices 56 to a corresponding group of 8x DWDM (also referred to as 8 channel or "8ch DWDM") filter optical components 60-1 to 60-6. As shown in the inset view at upper right, each 8ch DWDM group 60 includes an input optical fiber 59, eight DWDM filter (three-port) optical components 62A-62H with associated splices 56, and eight output optical fibers 64A-64H. The optical circuit 50 includes a total of fifty-three three-port optical components (including both the 8s0 filters 58-1 to 58-5 and forty-eight three-port components within the six 8ch DWDM groups 60-1 to 60-6) and 102 splices. Such optical circuit 50 may be divided into logical groups, each including an 8x DWDM filter (three-port) optical component group 60-1 to 60-6 and the preceding 8s0 filter 58-1 with associated splices 56, wherein each logical group may be installed in a corresponding single cavity of a dual-cavity fiber optic connection module described herein.

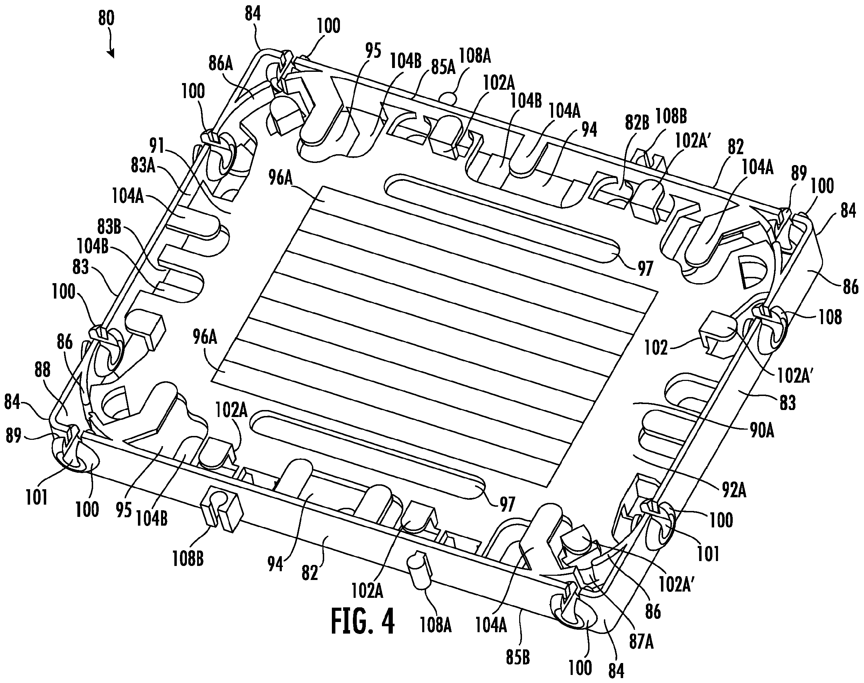

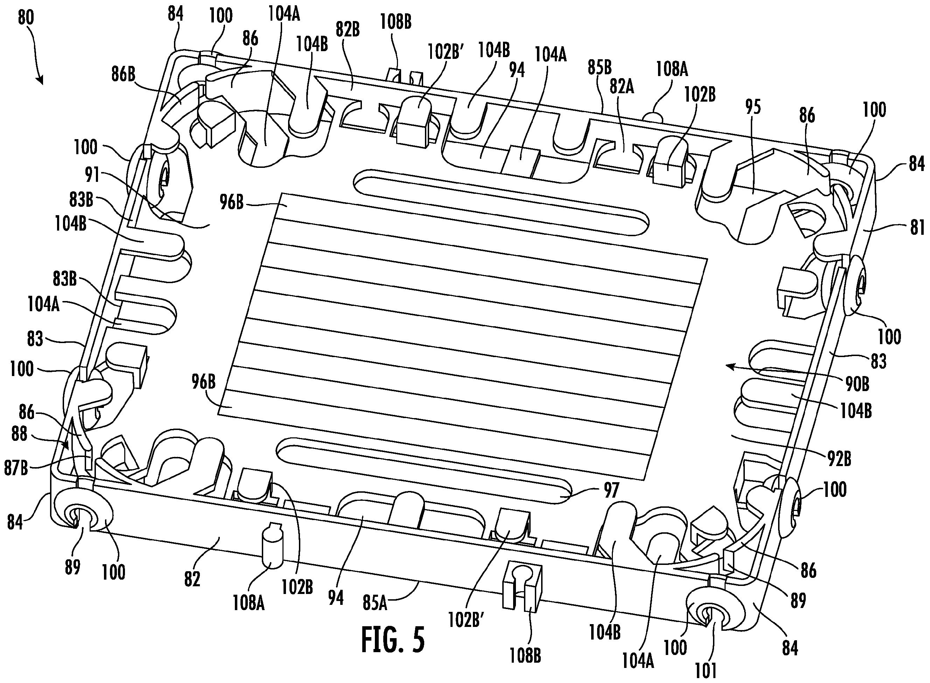

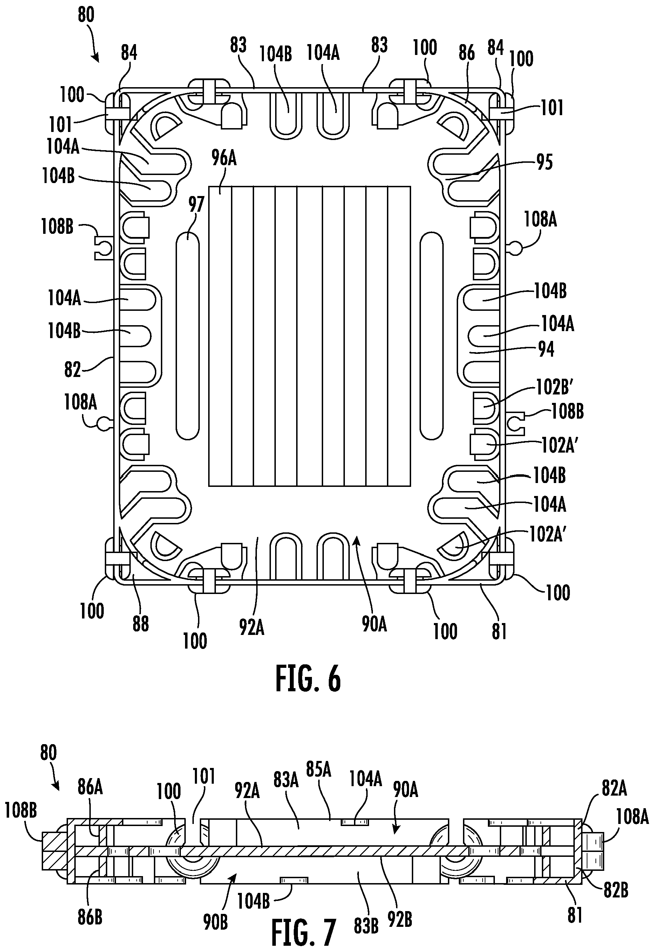

**FIGS. 4-7** depict a fiber optic connection module 80 according to one embodiment of the present disclosure, with **FIG. 4** providing an upper perspective view, **FIG. 5** providing a lower perspective view, **FIG. 6** providing a lower perspective view, and **FIG. 7** providing a cross-sectional view of the module 80. The fiber optic connection module 80 includes a body structure 81 that comprises a floor 91 having an upper surface 92A and a lower surface 92B, and comprises peripheral sidewalls 82, 83 (e.g., longitudinal sidewalls 82 and transverse sidewalls 83) that bound upper and lower cavities 90A, 90B. Specifically, the sidewalls 82, 83 include upper peripheral sidewall portions 82A, 83A that project upward relative to the floor 91, and include lower peripheral sidewall portions 82B, 83B that project downward relative to the floor 91, wherein the upper cavity 90A is bounded by the upper surface 92A of the floor 91 and the upper peripheral sidewall portions 82A, 83A, and the lower cavity 90B is bounded by the lower surface 92B of the floor 91 and the lower peripheral sidewall portions 82B, 83B, such that the cavities 90A, 90B are separated by the floor 91. In this regard, the body structure 81 may be considered to have a cross-sectional shape resembling a flattened "H" shape, as shown in **FIG. 7****.**

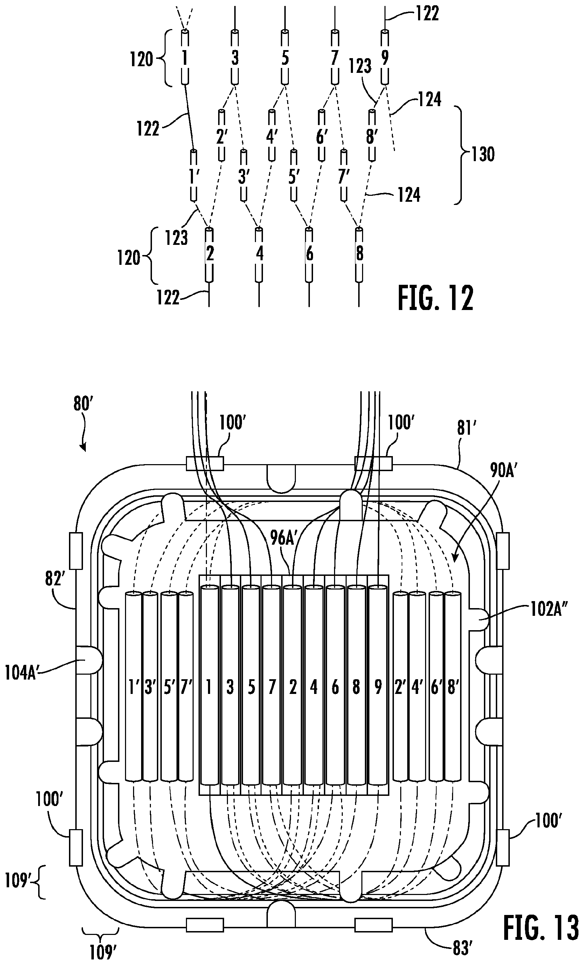

With reference to **FIGS. 4-6****,** the floor 91 has a generally rectangular shape (e.g., having a length of no greater than 100 mm (e.g., a length of 96 mm) and a width of no greater than 80 mm (e.g., a width of 75.5 mm) in certain embodiments, and the fiber optic connection module 80 may have a maximum height of no greater than 10 mm (e.g., a height of 9.5 mm) in certain embodiments. The floor 91 has multiple longitudinal recesses 96A defined in the upper surface 92A and multiple longitudinal recesses 96B defined in the lower surface 92B arranged at a center of the floor 91, and longitudinal slots 97 defined through the entire floor 91 being arranged between the longitudinal recesses 96A, 96B and the longitudinal sidewalls 82. The longitudinal recesses 96A, 96B (which may have concave curved or V-shaped cross-sectional shapes) are configured to receive generally cylindrical optical components (such as three-port optical components 1-9 shown in **FIG. 13****),** while the longitudinal slots 97 (which may be covered with double sided tape to prevent splice protectors from falling between cavities 90A, 90B) may be useful for receiving larger diameter optical components and/or optical splice protectors (e.g., 1'-9' shown in in **FIG.** 13). In certain embodiments, a module 80 may have a maximum height of 9.5 mm (measured between edges 85A, 85B of sidewalls 82, 83), the floor 91 may have a thickness of 0.5 mm, and presence of longitudinal slots 97 may accommodate optical components or splice protectors having diameters in a range of greater than 4.3 mm up to 4.9 mm, without causing a populated module to have a maximum height exceeding 9.5 mm (or 10 mm in certain embodiments). By using a curved or V-shaped cross-section for the longitudinal recesses 96A, 96B, cylindrical optical components with various outer diameters up to 4.3 mm are supported, without causing a populated module to have a maximum height exceeding 9.5 mm (or 10 mm in certain embodiments). At the same time, floor thickness is decreased only in local areas where the two cavities 90A, 90B are opposed to each other. Presence of the longitudinal recesses 96A, 96B and longitudinal slots 97, plus use of a module 80 having a single floor 91 with upper and lower cavities 90A, 90B, enables an overall height of a populated module to be no greater than 9.5mm, or no greater than 10mm, in certain embodiments.

The body structure 81 includes four corners 84 where the longitudinal sidewalls 82 and transverse sidewalls 83 meet, and includes four corner transition walls 86 that are proximate to, and inset from, the four corners 84. In certain embodiments, the body structure 81 may be fabricated of a polymeric material (optionally reinforced with glass fibers or other strengthening material) by injection molding or another suitable polymer shaping method (e.g., 3D printing, molding, etc.). Each corner transition wall 86 has a curved shape and merges into two adjacent sidewalls (specifically, into one longitudinal sidewall 82 and one transverse sidewall 83 in each instance) to ensure that optical fibers routed along an inner perimeter of each cavity 90A, 90B maintain a minimum bend radius (e.g., 30 mm radius in certain embodiments). Optionally, a hollow cavity 88 may be provided between each corner transition wall 86 and an adjacent corner 84 of the body structure 81. Each corner transition wall 86 includes an upper transition wall portion 86A projecting upward from the floor 91, and includes a lower transition wall portion 86B projecting downward from the floor 91. Each upper transition wall portion 86A and lower transition wall portion 86B defines a transition wall opening 87A, 87B to permit passage of one or more optical fibers into, or out of, a corresponding cavity 90A, 90B. Each of the sidewalls 82, 83 also defines two lateral openings 89 (optionally embodied in a primary vertical slot) each configured to receive a grommet 100, wherein each grommet 100 has a round body and defines a vertical slot 101 (i.e., a secondary vertical slot) to permit passage of one or more optical fibers therethrough. Each grommet 100 may comprises a soft rubber material to protect an optical fiber routed therethrough from being damaged by (potentially sharp) surfaces bounding openings 89 defined in the sidewalls 82, 83. The vertical slot 101 in each grommet 100 is open at one end to enable top-down insertion of optical fibers into the grommet 100. Each grommet 100 may permit passage of fibers into (or from) each of the upper cavity 90A and the lower cavity 90B.

With continued reference to **FIGS. 4-6****,** a plurality of first fiber guide members 102A project upward from the floor 91 into the upper cavity 90A, and a plurality of second guide members 102B project downward from the floor 91 into the second cavity 90B. The fiber guide members 102A, 102B are inset from the sidewalls 82, 83 and positioned to ensure a minimum bend radius (e.g., 30 mm radius in certain embodiments) for optical fibers contained therein, with each first fiber guide member 102A comprising a first fiber retaining tab 102A' projecting outwardly and being substantially parallel to the floor 91, and with each second fiber guide member 102B comprising a second fiber retaining tab 102B' projecting outwardly and being substantially parallel to the floor 91. The fiber guide members 102A, 102B are configured to retain a plurality of optical fibers in a peripheral (e.g., "racetrack") area between the fiber guide members 102A, 102B and the sidewalls 82, 83. The fiber optic connection module 80 further comprises a plurality of upper fiber retention members 104A projecting inward from the upper peripheral sidewall portions 82A, 83A proximate to an upper sidewall edge 85A, and comprises a plurality of lower fiber retention members 104B projecting inward from the lower peripheral sidewall portions 82B, 83B proximate to a lower sidewall edge 85B. The upper and lower fiber retention members 104A, 104B work in concert with the upper and lower fiber guide members 102A, 102B to ensure that optical fibers routed proximate to the sidewalls 82, 83 do not pop out of the fiber optic connection module 80 and allow for routing of optical fibers while following minimum fiber bending radius requirements.

The floor 91 defines primary openings 94 (e.g., arranged between the longitudinal slots 97 and longitudinal sidewalls 82) configured to permit routing of optical fibers between the upper cavity 90A and the lower cavity 90B. As shown in **FIGS. 4-6****,** upper and lower fiber retention members 104A, 104B may be arranged proximate to and overlap portions of the primary openings 94. Various secondary openings 95 may also be arranged around the perimeter of the floor 91, proximate to the sidewalls 82, 83 and the transition walls 86. While the secondary openings 95 could potentially be used for routing optical fibers between the upper and lower cavities 90A, 90B, the size, shape, and placement of the primary openings 94 is preferred for this purpose for ease of fiber insertion / extraction and to reduce the possibility of non-compliance with minimum fiber bending radius requirements. In certain embodiments, the upper cavity 90A and the lower cavity 90B area are each configured to contain up to nine three-port devices plus associated splices (e.g., eight or more splice protectors), wherein each of the three-port devices and splice protectors may have an elongated generally cylindrical shape.

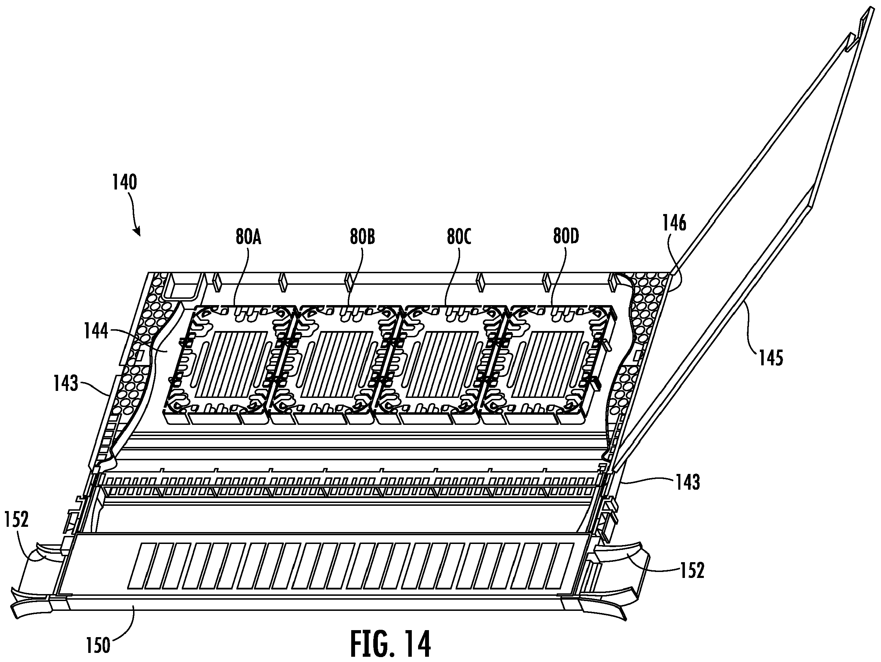

The fiber optic connection module 80 includes mechanical interlocking features 108A, 108B along exterior surfaces of the longitudinal sidewalls 82 to permit the module 80 to be removably coupled with adjacent modules of the same type in a side-by-side configuration, either outside a cassette (such as during module assembly and testing) or within a cassette (e.g., as shown in **FIG. 14**). Utilization of the mechanical interlocking features 108A, 108B to mechanically couple multiple modules 80 permits a mechanically stable subassembly to be formed, while removability of such coupling permits individual modules to be extracted and replaced if necessary (e.g., for rework or replacement of optical components and/or optical fibers). As shown in **FIGS. 4-6****,** the interlocking features 108A, 108B may be configured to be coupled or decoupled by vertical movement (e.g., vertical translation) of adjacent modules 80, such as by providing a male interlocking feature 108A having a vertically oriented cylindrical shape, and providing a female interlocking feature 108B having a correspondingly sized vertically oriented cylindrical recess, wherein the interlocking features 108A, 108B may be arranged in alternating fashion on opposing longitudinal sidewalls 83. As will be recognized by a person of ordinary skill in the art, mechanical interlocking features of other types may be employed.

**FIG. 7** is a cross-sectional view of the fiber optic connection module 80 cut in a transverse direction at a position non-coincident with the recesses 96A, 96B (shown in **FIGS. 4-****6**)**.** **FIG. 7** shows the upper and lower cavities 90A, 90B bounded by the upper and lower surfaces 92A, 92B of the floor 91, and shows the vertical slots 101 of the grommets 100 as being open along a top of the module 80 to permit top-down insertion of optical fibers. In certain embodiments, the module 80 may have a maximum height of 9.5 mm (e.g., between edges 85A, 85B that terminate the sidewalls including sidewall portions 83A, 83B), wherein the floor 91 may have a thickness of 0.5 mm, and each sidewall portion 83A, 83B (and therefore each cavity 90A, 90B) may have a height of less than 5 mm (e.g., a height of 4.5 mm).

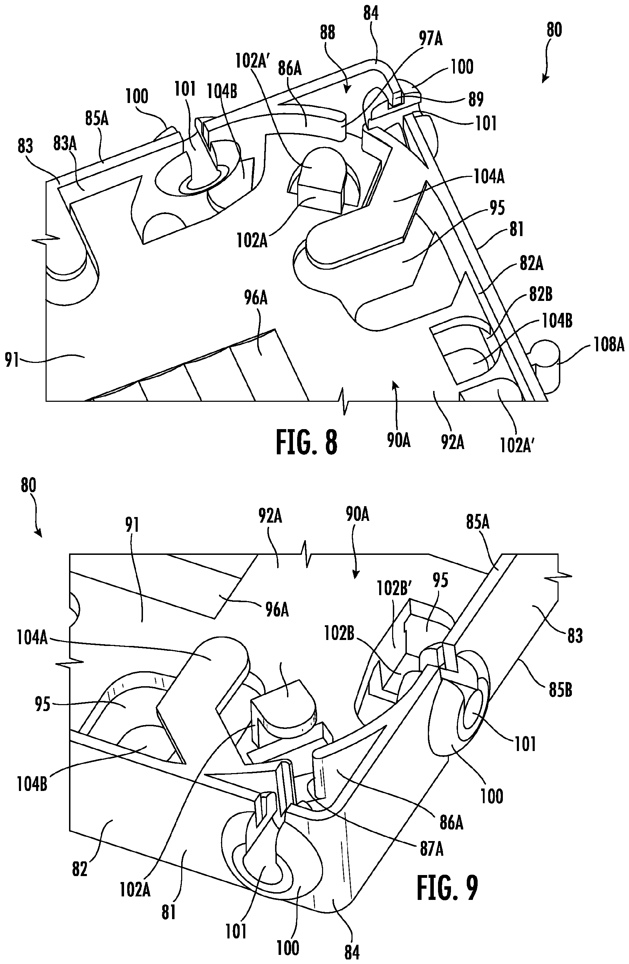

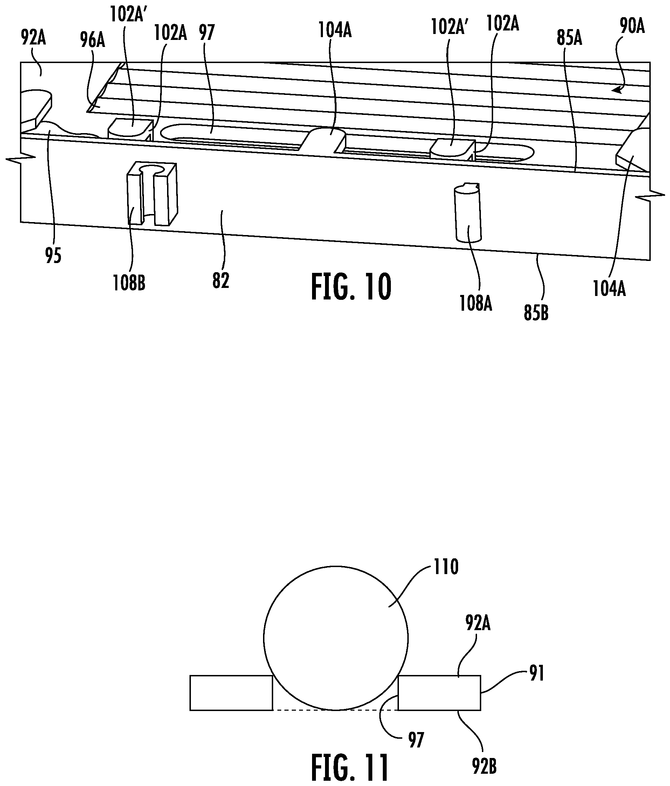

**FIGS. 8-10** provide upper perspective views of first to third portions of the fiber optic connection module 80 as previously shown in **FIGS. 4-7****.** **FIGS. 8-10** show the upper surface 92A of the floor 91 as including longitudinal recesses 96A having a concave shape in the upper cavity 90A, and show the grommets 100 as defining vertical slots 101 proximate to a corner 84 of the module 80. As shown in **FIGS. 8-9****,** the transition wall opening 87A defined in an upper transition wall portion 86A, in combination with the vertical slot 101 defined in an adjacent grommet 100 (and the hollow cavity 88 inset from the corner 84), enables an optical fiber to be routed from an exterior of the module 80 into the upper cavity 90A. Presence of the first fiber guide members 102A and the upper fiber retention members 104A helps retain optical fibers in a peripheral area of the upper cavity 92A proximate to the upper sidewall portions 82A, 83A and the upper transition wall portion 86A. **FIG. 10** shows the depth of the longitudinal slots 97 relative to the recesses 96A defined in the upper surface 92A of the floor 91, and further shows details of the mechanical interlocking features 108A, 108B along an exterior of a longitudinal sidewall 82, wherein each mechanical interlocking features 108A, 108B may terminate at a vertical boundaries short of the upper and lower edges 85A, 85B of the sidewall 82.

**FIG. 11** is a simplified cross-sectional view of a cylindrical optical component or splice protector 110 partially received within a longitudinal slot 97 defined in a floor 91 of a fiber optic connection module according to **FIG. 4****.** As noted previously, such a longitudinal slot 97 (which may be covered along one floor surface 92A, 92B with double sided tape to prevent splice protectors from falling through the slot 97) may be useful for receiving an optical component or splice protectors 110 of a larger diameter than could be accommodated in recesses (e.g., 96A in **FIGS. 8-10**) without causing maximum height of a populated module to exceed a desired threshold (e.g., 9.5 mm or 10 mm in certain embodiments).

**FIG. 12** is a schematic optical interconnection diagram for nine three-port optical components 120 (individually numbered as 1-9) and either associated splices 130 (individually numbered as 1'-9', and which may be contained in splice protectors) that may be arranged within one cavity of a fiber optic connection module according to one embodiment of the present disclosure. Combination fibers 122, through fibers 123, and reflect fibers 124 are provided among or between the respective optical components 120 and splices 130, causing the three-port optical components 120 to be coupled in a concatenated manner.

**FIG. 13** is a simplified top plan view of a fiber optic connection module 80' having a body structure 81' according to one embodiment, including the interconnected nine three-port components 1-9 and associated splices 1'-9' of **FIG. 12** arranged in an upper cavity 90A', with optical fibers routed through grommets 100' and retained in a peripheral (racetrack) region 109' between upper fiber guide members 102A" and sidewalls 82', 83', with such fibers also being retained therein by fiber retention members 104A'. As shown, the nine three-port optical components 1-9 are centrally provided in the upper cavity 90A' in longitudinal recesses 96A', while the eight splices 1'-8' are provided in two groups of four splices each oriented parallel with the three-port optical components 1-9, between the three-port optical components and the longitudinal sidewalls 82'.

As noted previously, multiple fiber optic connection modules as disclosed herein may be incorporated into a DWDM cassette, which may be configured to be slidably mounted in a chassis supportable by a fiber optic equipment rack. During fabrication of a cassette, a plurality of first three-port optical components may be connected, with multiple optical fibers and multiple fiber splices in an upper cavity of a first fiber optic connection module. Such a module may be flipped upside-down, and a plurality of second three-port optical components may be connected, with multiple optical fibers and multiple fiber splices in a lower upper cavity of the first module. The plurality of first three-port optical components and the plurality of second three-port optical components may be tested before the first module is installed in a cassette. The same process may be replicated for a second module, in which a plurality of third three-port optical components may be connected in an upper cavity of the second module, the second module may be flipped upside-down, a plurality of fourth three-port optical components may be connected in a lower cavity of the second module, and the pluralities of third and fourth optical components may be tested before the second module is installed in a cassette. Optionally, the first and second modules may be mechanically coupled together prior to testing and/or prior to installation into a cassette. After testing is complete, the first and second modules are installed (and mechanically coupled together) in a cassette. It is to be appreciated that the foregoing process may be expanded or repeated to include any suitable number of fiber optic connection modules per cassette - such as three, four, or more modules per cassette, wherein each module in a cassette may be mechanically coupled in a side-by-side manner to at least one laterally adjacent module. In certain embodiments, each module contains an interconnected logical grouping of three-port optical components, and various modules are optically interconnected with one another.

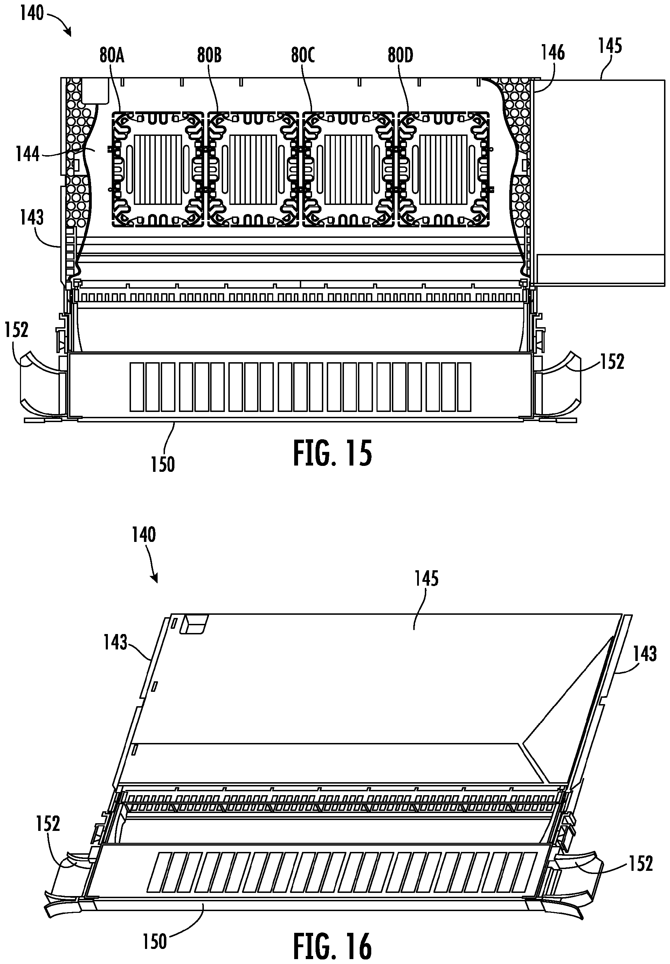

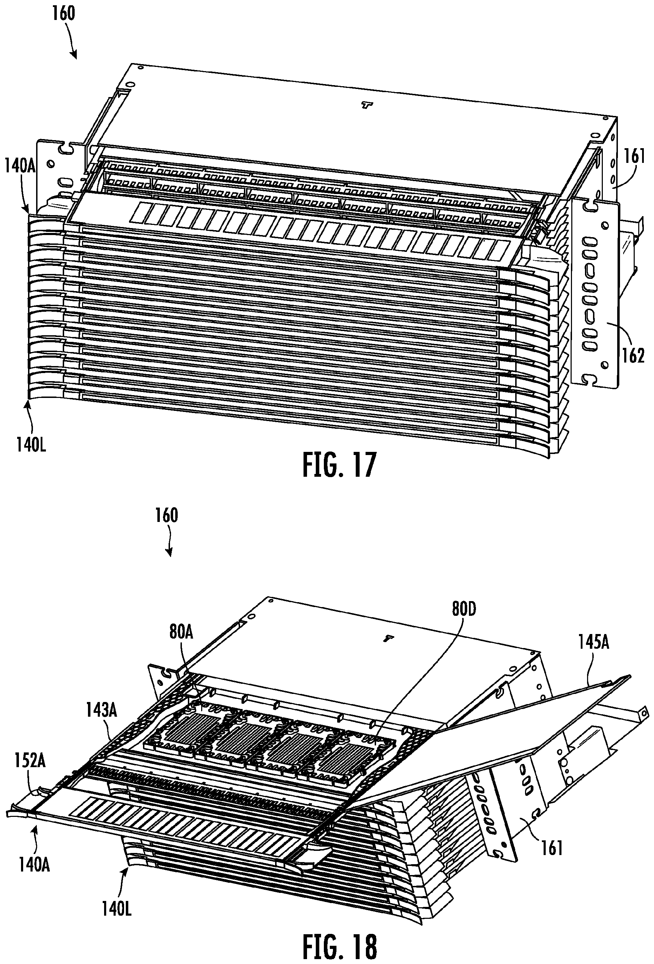

**FIG. 14** is an upper perspective view of a cassette 140 configured to be slidably received in a chassis (e.g., 161 in **FIGS. 17-18**), the cassette 140 having a cavity 144 containing four fiber optic connection modules 80A-80D (each according to the module 80 of **FIG. 4**) with the modules 80A-80D being interconnected (mechanically coupled to one another) side-by-side configuration. The cavity 144 may be closed from above with a hinged lid 145 (joined to the cassette 140 with a hinge 146), wherein **FIG. 14** shows the hinged lid 145 in an open state, as may be useful to access the modules 80A-80D during cassette assembly or rework, either prior to insertion of the cassette into a chassis or when the cassette 140 is deployed (retracted) from the chassis. The cassette 140 includes side rails 143 that are configured to cooperate with a chassis to permit the cassette 140 to be translated in a forward and rearward direction. Proximate to a front end 150 of the cassette 140, the cassette 140 includes lateral routing guides 152 configured to permit optical fibers to be routed into or out of the cassette 140. **FIG. 16** shows the cassette 140 of **FIG. 15** with the hinged lid 145 in a closed state to enclose the cavity 144 and cover the modules 80A-80D therein, wherein the closed state of the hinged lid 145 may be appropriate for inserting the cassette 140 into a chassis.

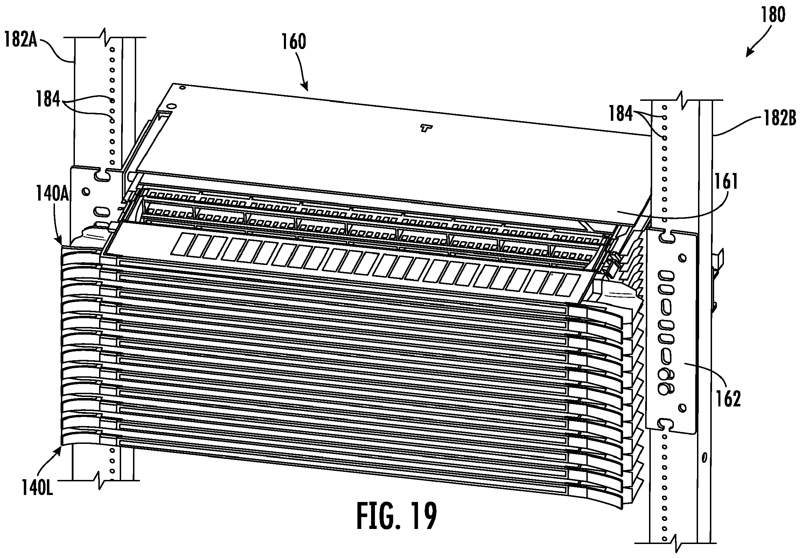

**FIG. 17** is a perspective view of an optical assembly 160 including a chassis 161 in which twelve cassettes 140A-140L (each according to the cassette 140 of **FIG. 14** and containing four fiber optic connection modules according to **FIG. 4****)** are slidably mounted, with each cassette 140A-140L in an inserted (closed) configuration. Mounting brackets 162 along front side edges of the chassis 161 may be used to mount the chassis 161 to a fiber optic equipment rack (e.g., embodied in vertical rails 182A-182B shown in **FIG. 19****,** or embodied in a cabinet (not shown)). The chassis 161 embodies a 6-U sized chassis, with "U" being known in the art and equal to a standard 1.75 inches (44.5 mm) in height and typically nineteen (19) inches (48.3 cm) in width. In certain applications, the width of "U" may be twenty-three (23) inches (58.4 cm). The illustrated chassis 161 includes two cassettes per U-space. Although the illustrated chassis 161 is a 6-U chassis, the chassis 161 could be provided as a 1-U, 2-U, 4-U, 6-U, 8-U or other sized chassis.

**FIG. 18** is a perspective view of the optical assembly 160 of **FIG. 17** (including the chassis 161 containing twelve cassettes 140A-140L), showing the uppermost cassette 140A in a retracted (open) configuration, and with the hinged lid 145A thereof in an open state to expose the fiber optic connection modules 80A-80D within the cassette. Side rails 143 of the cassette 140A may cooperate with a receiving structure (not shown) internal to the chassis 161 to permit the cassette 140 to translate in a forward and rearward direction relative to the chassis 161.

**FIG. 19** is a perspective view of the optical assembly 160 of **FIG. 17** (including chassis 161 and cassettes 140A-140L) mounted in a fiber optic equipment rack embodying vertical rails 182A, 182B that each include mounting holes 184 for receiving brackets 162 of the chassis 161 (which may also be referred to as a "housing") and associated fasteners. Although a single chassis 161 of a 6-U capacity is shown, it is to be appreciated that multiple chassis of any suitable type and capacity may be provided between a single pair of vertical rails 182A, 182B. In certain embodiments, each cassette 140A-140L includes at least three, or includes four, fiber optic connection modules therein, with each module having upper and lower cavities and being in accordance with the module 80 of **FIG. 4****.** In an embodiment with four dual-cavity modules being provided in each cassette 140A-140L, and with each module cavity containing nine three-port optical components and associated splices therein, a total of 72 three-port optical components are provided per cassette, and given the presence of two cassettes per U-space, the resulting optical assembly supports a density of 144 three-port optical components per U-space in a chassis. In an embodiment with three dual-cavity modules being provided in each cassette 140A-140L, and with each module cavity containing nine three-port optical components and associated splices therein, a total of 54 three-port optical components are provided per cassette, and given the presence of two cassettes per U-space, the resulting optical assembly supports a density of 108 three-port optical components per U-space in a chassis.

Those skilled in the art will appreciate that various modifications and variations can be made without departing from the spirit or scope of the invention. Since modifications, combinations, sub-combinations, and variations of the disclosed embodiments incorporating the spirit and substance of the invention may occur to persons skilled in the art, the invention should be construed to include everything within the scope of the appended claims and their equivalents. The claims as set forth below are incorporated into and constitute part of this detailed description.

It will also be apparent to those skilled in the art that unless otherwise expressly stated, it is in no way intended that any method in this disclosure be construed as requiring that its steps be performed in a specific order. Accordingly, where a method claim below does not actually recite an order to be followed by its steps or it is not otherwise specifically stated in the claims or descriptions that the steps are to be limited to a specific order, it is no way intended that any particular order be inferred.

## Claims

1. A fiber optic connection module comprising:
a body structure comprising a floor and sidewalls, the sidewalls including upper peripheral sidewall portions projecting upward relative to the floor and lower peripheral sidewall portions projecting downward relative to the floor, the floor having an upper surface and a lower surface, and the floor defining at least one opening, wherein the body structure further defines an upper cavity and a lower cavity, the upper cavity being bounded by the upper surface of the floor and the upper peripheral sidewall portions, and the lower cavity being bounded by the lower surface of the floor and the lower peripheral sidewall portions;
a plurality of first fiber guide members projecting from the floor into the upper cavity and configured to retain a first plurality of optical fibers between the first fiber guide members and the upper peripheral sidewall portions; and
a plurality of second fiber guide members projecting from the floor into the lower cavity and configured to retain a second plurality of optical fibers between the second fiber guide members and the lower peripheral sidewall portions;
wherein the upper cavity is configured to receive a plurality of first optical components and a plurality of first splices;
wherein the lower cavity is configured to receive a plurality of second optical components and a plurality of second splices; and
wherein the at least one opening defined by the floor is configured permit routing of optical fibers between the upper cavity and the lower cavity.

2. The fiber optic connection module of claim 1, wherein the plurality of first optical components comprises a plurality of first three-port optical components, and the plurality of second optical components comprises a plurality of second three-port optical components.

3. The fiber optic connection module of any one of claims 1 or 2, wherein the sidewalls define a plurality of lateral openings each receiving a corresponding grommet configured to permit passage of an optical fiber through the sidewall.

4. The fiber optic connection module of claim 3, wherein each lateral opening of the plurality of lateral openings comprises a primary vertical slot into which the corresponding grommet is received, and the corresponding grommet comprises a secondary vertical slot that permits passage of an optical fiber through the sidewall.

5. The fiber optic connection module of any one of claims 1 to 4, wherein:
the upper peripheral sidewall portions comprise an upper sidewall edge distal from the floor;
the lower peripheral sidewall portions comprise a lower sidewall edge distal from the floor; and
the fiber optic connection module further comprises:
a plurality of upper fiber retention members projecting inward from the upper peripheral sidewall portions proximate to the upper sidewall edge; and
a plurality of lower fiber retention members projecting inward from the lower peripheral sidewall portions proximate to the lower sidewall edge.

6. The fiber optic connection module of any one of claims 1 to 5, wherein:
the sidewalls comprise four sidewalls;
the body structure comprises a rectangular shape and four corners defined by the four sidewalls;
the body structure further comprises four corner transition walls that are proximate to, and inset from the four corners;
each corner transition wall of the four corner transition walls comprises a curved shape and merges into two adjacent sidewalls of the four sidewalls; and
the four corner transition walls include upper transition wall portions projecting upward relative to the floor and lower transition wall portions projecting downward relative to the floor.

7. The fiber optic connection module of claim 6, wherein each corner transition wall of the four corner transition walls defines a transition wall opening configured to permit passage of an optical fiber through the corner transition wall.

8. The fiber optic connection module of any one of claims 1 to 7, wherein:
each first fiber guide member comprises a first fiber retaining tab projecting outwardly and being substantially parallel to the floor; and
each second fiber guide member comprises a second fiber retaining tab projecting outwardly and being substantially parallel to the floor.

9. The fiber optic connection module of any one of claims 1 to 8, further comprising mechanical interlocking features along exterior surfaces of two opposing sidewalls and configured permit the fiber optic connection module to be removably engaged to an adjacent fiber optic connection module in a side-by-side configuration.

10. The fiber optic connection module of any one of claims 1 to 8, wherein:
the upper surface of the floor comprises a first plurality of recesses configured to receive portions of the plurality of first optical components, and
the lower surface of the floor comprises a second plurality of recesses configured to receive portions of the plurality of second optical components.

11. The fiber optic connection module of any one of claims 1 to 10, wherein the upper cavity has a height of less than 5 mm, the lower cavity has a height of less than 5 mm, and the body structure has a total height of no greater than 10 mm.

12. The fiber optic connection module of any one of claims 1 to 11, wherein the body structure has a width of less than 80 mm and a length of less than 100 mm.

13. The fiber optic connection module of any one of claims 1 to 12, being configured to receive a first group of nine three-port optical components in the upper cavity, and being configured to receive a second group of nine three-port optical components in the lower cavity.

14. A cassette comprising a plurality of fiber optic connection modules according to any one of claims 1 to 13, with the fiber optic connection modules of the plurality of fiber optic connection modules being arranged in a side-by-side configuration.

15. The cassette of claim 14, wherein:
the plurality of fiber optic connection modules comprises four fiber optic connection modules; and
each fiber optic connection module of the four fiber optic connection modules is configured to receive a first group of nine three-port optical components in the upper cavity, and being configured to receive a second group of nine three-port optical components in the lower cavity.
